(19)

Europäisches Patentamt
European Patent Office
Office européen des brevets

(11) **EP 2 584 532 A1**

(12) **EUROPEAN PATENT APPLICATION**

(43) Date of publication:
**24.04.2013 Bulletin 2013/17**

(51) Int Cl.:
***G06T 11/00*** *(2006.01)*

(21) Application number: **11008461.3**

(22) Date of filing: **21.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Friedrich-Alexander-Universität
Erlangen-Nürnberg
91054 Erlangen (DE)**

(72) Inventors:
• **Kachelrieß, Marc
90409 Nürnberg (DE)**
• **Grimmer, Rainer
91056 Erlangen (DE)**

(74) Representative: **Schneider, Andreas
Oberer Markt 26
92318 Neumarkt i.d.OPf. (DE)**

(54) **Empirical cupping correction for CT scanners with primary modulation**

(57)    The present invention relates to a method for artifact correction in image acquisition, e.g. in CT imaging or in another imaging modality, said image acquisition using an image acquisition apparatus, said method using a polynomial precorrection-function, the polynomial coefficients of which being determined using a linear combination of reconstructed images. In order to provide an effective and easy to incorporate method that compensates for acquisition apparatus dependent changes of the detected spectrum, it is suggested that said precorrection-function is parameterized by one or more error variation functions M that can be spatially and/or temporally dependent.

FIG 3

(a) Measurement without Modulator    (b) Measurement with Modulator    (c)ECCP–corrected

Printed by Jouve, 75001 PARIS (FR)

## Description

The present invention relates to a method for artifact correction in image acquisition, e.g. in CT imaging or in another imaging modality, said image acquisition using an image acquisition apparatus, said method using a precorrection-function, the parameters of which being determined using a combination of reconstructed images.

Polychromatic CT data suffer from beam hardening because the object's attenuation coefficient $\mu$ (r,E) is not only a function of the spatial position r but also of the photon energy E. Typically, a first order precorrection approach is applied to CT data to eliminate the effects of the most dominating material in the object. In medical CT this means precorrecting for water, which is the dominating material in soft tissue. This so-called water precorrection assumes that the attenuation coefficient decomposes into the product of a spatially dependent term f(r) and an energy dependent term $\psi$ (E) such that $\mu(r,E) = f(r)\psi(E)$.

Under this assumption, the measured projection data

$$q(L) = -\ln \int dE\, w(L,E) e^{-\int dL\, \mu(E,r)}$$

which are a function of the line of integration L, of the detected spectrum w(L,E) and of the object attenuation $\mu$ (r,E) can be written as

$$q(L) = -\ln \int dE\, w(L,E) e^{-\psi(E)p(L)}$$

where

$$p(L) = \int dL\, f(r)$$

is the x-ray transform through the density distribution f(r). Given the detected spectrum w(L,E) and given the energy dependency $\psi$ (E) of the most dominating material, e.g. the mass attenuation coefficient of water, one can invert this measurement equation point-wise to obtain p(L) from q(L). If this precorrection is done for sufficiently many lines L one can then use the precorrected rawdata p(L) for reconstruction and obtain an image f(r) that is free of first order beam hardening artifacts. Since these first order artifacts often show up as cupping, this precorrection is also known as cupping correction.

In most cases, however, the detected spectra w(L,E) are not known with sufficient accuracy, and one prefers to use calibration methods. From DE 10 2005 018 660 B4 a method called empirical cupping correction (ECC) is known. Said method only requires a single scan of a homogeneous phantom of arbitrary shape to determine the coefficients $c_n$ of the precorrection polynomial

$$p = \sum_n c_n q^n$$

that converts the measured data q into precorrected data p. These coefficients are then stored and used later to correct the rawdata. However, said ECC method assumes that w(L,E) = w(E). In other words, said method does not take into account that the detected spectra w(L,E) varies as a function of the detector position and/or as a function of the projection angle and/or as a function of the time.

In US 2007/0268997 A1 a scatter reduction method using a primary modulator was proposed. In the following this method is called primary modulator scatter estimation (PMSE). A checkerboard prefilter, the primary modulator, is used to modulate some primary intensities to high frequencies, while scattered radiation will dominate the low frequencies. Signal processing of the measured intensity distribution then allows removal of the scatter from the primary. However, the primary modulator introduces spatially dependent beam hardening and, consequently, the detected spectra strongly vary as a function of the detector position. New beam hardening artifacts are introduced. To reduce these, significant compromises in the choice of the modulator material and modulator thickness are necessary. In order to correct artifacts caused by PMSE in reconstructed images it is known from the prior art to apply image filtering techniques to the reconstructed images. However, these filtering techniques are complex and time consuming and provide only a reduction of the appearance of the artifacts and do neither address nor correct the underlying (physical) nature of the problem.

Hence, a solution is requested for precorrecting for the effects of the primary modulation or, more generally, in precorrecting scans with detected spectra w(L,E) that more or less strongly vary as a function of L. One option to do such a precorrection is to combine an analytical precorrection, that needs to make assumptions on the detected spectra but that allows inclusion of the dependency on L, with the empirical cupping correction. However, it is not known exactly how the primary modulator projects onto the detector, and additionally, its projection shows penumbra effects due to the finite focal spot size and due to the finite thickness of the modulator itself. The latter plays a role for rays that do not intersect the modulator exactly perpendicular to its surface. Hence, an analytical precorrection is not adequate.

It is an object of the present invention to provide an effective and easy to incorporate method that compensates for acquisition apparatus dependent changes of the acquired data, in particular for acquisition apparatus dependent changes of the detected spectrum.

This object is achieved according to the invention by a method for artifact correction as claimed in claim 1. The method is characterized in that said precorrection-function is parameterized by one or more error variation functions M that can be spatially and/or temporally dependent.

The advantages and embodiments explained in the following text with regard to the method also apply analogously to an image acquisition apparatus according to the invention and vice versa.

According to a preferred embodiment of the invention, the method is characterized in that the precorrection-function is a polynomial function, defined as

$$p = \sum_{ij} c_{ij} M^i q^j$$

with p being the precorrected data, and q being the measured data, and $c_{ij}$ being a set of correction coefficients, and M being the error variation function. If the precorrection-function is a polynomial function, the correction coefficients $c_{ij}$ are preferably determined using a linear combination of reconstructed images.

According to a preferred embodiment of the invention, the method is characterized in that said error variation function M is a spectrum change function representing effects influencing the measured spectrum. In that case, said error variation function M is preferably a spatially dependent spectrum change function.

According to a preferred embodiment of the invention, the method is characterized in that said error variation function is obtained by means of image acquisition and representing effects influencing the measured acquisition, said effects being caused by said image acquisition apparatus.

The present invention provides an easy to use and time efficient calibration method to the problem of changing acquisition data, in particular of changing spectra. The method can be applied to different image acquisition techniques, e.g. to CT imaging or other imaging modalities. The method can be carried out with low effort regarding calibration, data storage and calculation. In particular the method can be used effectively in medical imaging.

With the present invention a solution is presented for precorrecting for the effects of the primary modulation as introduced by the PMSE method. More generally, the present invention provides a method for precorrecting scans with potentially varying errors in the acquired data, in particular with detected spectra w(L,E) that more or less strongly vary as a function of L. The correction idea of the present invention is for example also applicable to the heel effect, or to bowtie filtration, i.e. taking into account the influence of a shaped prefilter. Furthermore, the correction idea is applicable to inhomogeneities in the detector response, or to variations of the path length of the rays through the prefiltration. In principle, the idea of the present invention is applicable to correct varying errors observable on the detector. This may include all varying errors caused within the path of rays outside of the detector, as well as varying errors of the detector itself. Variations of the error can be e.g. variations depending on the detector position in u and/or v direction, and during the acquisition, e.g. with respect to the projection angle, said $\alpha$ direction.

The ECCP method according to the present invention corrects for all variations in the acquired data, in particular in the detected spectrum, with only a single set of correction coefficients. In other words, despite the position dependency, i.e. the dependency on the position of the detector pixel, there is not a group of calibration functions needed. Instead, a single calibration function is sufficient. In other words, instead of using a group of correction functions, which all would have had to be calculated and stored, in order to address the variations in the error, only a single correction function is necessary which incorporates the error variation.

The new method is an empirical method. No explicit knowledge of the acquired data, in particular of the detected spectrum or knowledge of the different effects influencing the detected spectrum is necessary. No explicit knowledge of e.g. the modulator, pre- or postfiltration, or the heel effect is necessary. There are no special requirements with regard to size or shape of the calibration phantom.

The inventive method, which in the following is also called empirical cupping correction for primary modulation (ECCP), provides precorrection for spatially varying spectral properties of the x-rays, as they may be induced by a spatially varying pre- or postfiltration. The development of ECCP was motivated by a prefiltration means, in particular by the primary beam modulator that is part of the PMSE method used to suppress scatter artifacts. However, ECCP is likely to be useful in other situations as well. These may include, but are not limited to, the use of ECCP to compensate for shaped prefiltration, for the heel effect, or for scratches in the pre- or post filtration that induce subtle ring artifacts in the reconstructed CT images. A spatially varying pre- or postfiltration may include for example constructional variations of the detector and/or the employment of components within the path of rays.

The evaluation of measured datasets has shown that ECCP is capable of almost completely eliminating the artifacts induced by the primary modulator. Since no assumptions for the calibration are necessary, except for the calibration phantom to be of a homogeneous material, ECCP appears to be a practical and useful calibration method. It was also shown that ECCP can be applied to PMSE-precorrected rawdata, thus achieving the desired combination of scatter reduction and first order beam hardening and ring artifact removal. The remaining scatter artifacts, which are visible when compared to a slitscan dataset, show that there is some room for improvement in the PMSE method.

The object of the present invention is also achieved by an image acquisition apparatus as claimed in claim 7, which comprises means adapted for carrying out the method. Said means preferably comprise a computer capable of executing a computer program comprising computer instructions adapted to perform the method according to the invention when the computer program is executed in said computer.

The object of the present invention is also achieved by a computer program as claimed in claim 8, said computer program comprising computer instructions adapted to perform the method according to the invention when the computer program is executed in a computer. The technical effects necessary according to the invention can thus be realized on the basis of the instructions of the computer program in accordance with the invention. Such a computer program can be stored on a carrier such as a CD-ROM or it can be available over the internet or another computer network. Prior to executing the computer program is loaded into the computer by reading the computer program from the carrier, for example by means of a CD-ROM player, or from the internet, and storing it in the memory of the computer. The computer includes inter alia a central processor unit (CPU), a bus system, memory means, e. g. RAM or ROM, storage means, e. g. floppy disk or hard disk units and input/output units. Preferably the computer is an integral component of the imaging acquisition apparatus.

Other aspects of the invention will be described in detail hereinafter, by way of example, with reference to the following embodiments and the accompanying drawings; in which:

Figures 1  show basis images $f_{ij}(r)$ of the water phantom used for ECCP calibration,

Figure 2  shows a projection image M(u,v) of the modulator,

Figures 3  show reconstructions of the water phantom,

Figures 4  show the plots through the different reconstructions of the water phantom,

Figures 5  show reconstructions of the Catphan phantom,

Figures 6  show reconstructions of the anthropomorphic thorax phantom,

Figures 7  show further reconstructionsto illustrate a combination of PMSE and ECCP, and

Figures 8  show profiles through the different reconstructions of the Catphan phantom.

X-ray CT measures the attenuation of polychromatic x-rays through an object. The rawdata acquired, which are the negative logarithm of the relative x-ray intensity behind the object, e.g. the patient, must undergo a precorrection, e.g. a water precorrection, to linearize the measurement and to convert them into line integrals that are ready for reconstruction. The function to linearize the measured projection data depends on the detected spectrum of the ray. This spectrum may vary as a function of the detector position, e.g. in cases where the heel effect becomes relevant, or where a bow-tie filter introduces channel-dependent beam hardening, or in cases where a primary modulator is used to modulate the primary intensity of the spectrum.

Scatter correction with the primary modulator method (PMSE) provides a good estimate of the scatter background during the measurement of an arbitrary object. PMSE works good for monochromatic data. However, polychromatic data lead to reduced accuracy in the scatter estimate and to beam hardening effects in the reconstructed images.

In the present invention a new approach is proposed that allows to handle these effects. The new method, called empirical cupping correction for primary modulation (ECCP), corrects for artifacts, such as cupping artifacts or ring artifacts, that are induced by non-linearities in the projection data due to spatially varying pre- or post filtration of the x-rays. To do so, ECCP requires only a simple scan of a homogeneous phantom of nearly arbitrary shape. In other words, any reasonable shape of a phantom can be used. Based on this information, coefficients of a polynomial series are calculated and stored for later use.

Physical measurements demonstrate the quality of the precorrection that can be achieved using ECCP to remove the cupping artifacts and to obtain well-calibrated CT-values even in cases of strong primary modulation. A combination of ECCP with analytical techniques yielding a hybrid cupping correction method is possible and allows for channel-dependent correction functions.

The proposed ECCP method is a very effective and easy to incorporate approach that compensates for even strong detector channel dependent changes of the detected spectrum.

In the following, the method is explained in more detail with respect to the PMSE method. Correction is required for primary modulation introduced artifacts, in particular for beam hardening artifacts.

To solve the above mentioned problem instead of an analytical precorrection, a calibration method is proposed that is invoked once after the primary modulator has been mounted. The proposed method is a further development and generalization of the known ECC algorithm.

The ECCP method is based upon the following basic ideas: Information about the detector position depending effect of the modulator (e.g. thickness, shape, and penumbra) is available in the $I_0$ image (zero image) of the modulator. The $I_{0\_Mod}$ image is used as function of the different strength of the modulator spectrum change effect. $M(\alpha,u,v)$ is used as the spectrum change function of the modulator. In other words, the spectrum change, i.e. the amount of error, is not known, but it is known how the error varies depending on the detector position. Now, a linear combination of basis images is found that reduces the error of between the reconstruction of a one material phantom and the binary reconstruction of the measured phantom. The basis images incorporates the dependency of the localization function of the modulator $M(\alpha,u,v)$.

Let $\alpha$ denote the projection angle that defines the source position, and let u and v denote the position on the detector, such that the line of integration L is parameterized by $\alpha$, u and v. Let $M(\alpha,u,v)$ be the contribution of a PMSE modulator to the air image that is used to normalize the measured intensities prior to taking the negative logarithm. $M(\alpha,u,v)$ reflects the modulation of the intensities induced by the primary modulator. It is assumed $M(\alpha,u,v)$ to be the logarithm of the intensities measured with the primary modulator being in place but with no object being in the field of measurement. Thus, up to a scaling factor, $M(\alpha,u,v)$ can be thought to be a value between 0 and 1. Then, ECCP, the empirical cupping correction with primary modulation, uses the decomposition function

$$p = \sum_{ij} c_{ij} M^i q^j$$

with $p = p(\alpha,u,v)$, with $q = q(\alpha,u,v)$ and $M = M(\alpha,u,v)$, to convert measured data q into (water-)precorrected monochromatic data p. It should be noted that while the projection data p and q and the modulator data M are functions of the projection angle $\alpha$ and of the position (u,v) on the detector, the coefficients $c_{ij}$ to be determined are constant, as they only reflect the influence of the beam hardening.

These calibration coefficients $c_{ij}$ are then determined using in principle the same method as in described in DE 10 2005 018 660 B4 such that the ECCP method comprises of the following steps:

First, a modulator scan $M(\alpha,u,v)$, with the modulating prefilter installed but with no other object in place, is acquired.

For a complete acquisition, a full set of projections images are acquired using all projections angles $\alpha$. Alternatively, if there is no variation of the projection angle $\alpha$, the angle dependency can be omitted, i.e. M(u,v) can be used. Alternatively, if it can be assured that neither the focal spot, nor the modulator, nor the detector, nor any other type of prefilter or shaped prefiltration that may be installed in the scanner change their relative position as a function of the rotation angle, it may be sufficient to acquire only a single projection image of the modulator, or to average the modulator scan over all projection angles $\alpha$. In case that only a single or an averaged projection image of the modulator is acquired, the modulator scan M may not fit for all images and a shift detection can be implemented, as discussed in more detail below.

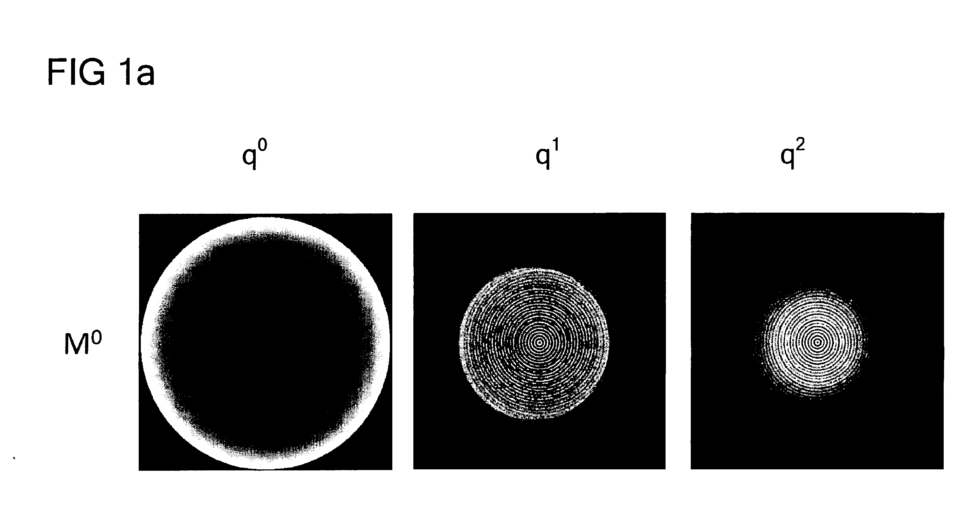

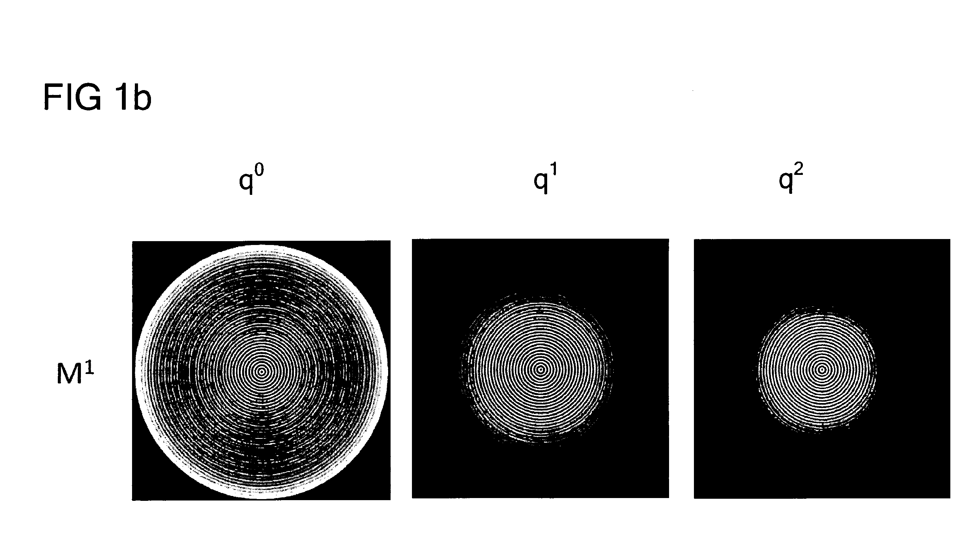

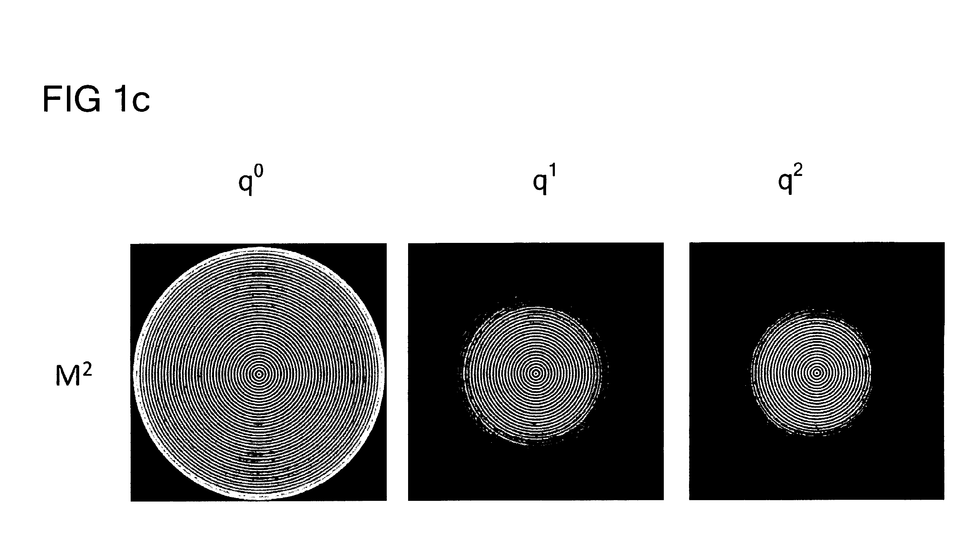

In a subsequent step, a calibration phantom that mainly consists of one homogeneous material of constant density is scanned to yield the calibration rawdata $q(\alpha,u,v)$. Now the monomial combinations $M^i(\alpha,u,v)\, q^j(\alpha,u,v)$ can be reconstructed to obtain the so-called basis images or basis volumes $f^{ij}(r)$. Figure 1 shows such basis images for $0 \leq i,j \leq 2$, i.e. the basis images are shown up to the quadratic terms. For the sake of better visibility, the three lines $M^0$, $M^1$, $M^2$ of the matrix are shown separately in Figures 1a, 1b, and 1c. All images are scaled to have the windowing centered around the mean value and the window width is four times the standard deviation. The volume $f_{01}(r)$, which corresponds to the uncorrected reconstruction of the acquired rawdata, is segmented by simple thresholding, thereby using a method to obtain a template volume $t(r)$ that is 0 outside the phantom, and 1 inside. Additionally, a weight volume $w(r)$ can be defined to fade out unreliable regions of the volume as described in DE 10 2005 018 660 B4.

Finally, the precorrection coefficients $c_{ij}$ are determined by minimizing

$$\int d^3 r \, w(r)(f(r) - t(r))^2$$

with

$$f(r) = \sum_{ij} c_{ij} f_{ij}(r)$$

The thus determined coefficients $c_{ij}$ are then stored and used for the precorrection of subsequent CT scans with arbitrary objects. Precorrection is done by applying the precorrection-function to the measured rawdata $q(\alpha,u,v)$.

It is to be noted, that the method according to the present invention is a generalization of the known ECC method insofar as with the ECC method it has been assumed that the error does not change (M = 1), whereas with the ECCP method an error variation is taken into account (M $\neq$ 1).

For the evaluation of the proposed method a flat-panel tabletop cone-beam CT system has been used. The scanner has a Varian PaxScan 4030CB detector consisting of 1024 x 768 quadratic detector elements of 0.388 mm size. The x-ray tube is a Varian G-1593 insert with a B-180H housing and used with 120 kV and 30 nA at 8 ms pulse length and 15 pulses per second. The distance between the focus and the isocenter is $R_F$ = 786 mm. The distance of the isocenter to the detector is $R_D$ = 416 mm. The radius of the field of measurement (FOM) is about $R_M$ = 128 mm and the length of the FOM yields $L_M$ = 163 mm for a circle scan. Full scans with $N_{360}$ = 625 projections have been performed. This results in an angular increment of $\Delta\alpha$ = 0.576°. The reconstructed volumes consist of $512^3$ voxels over the complete field of view.

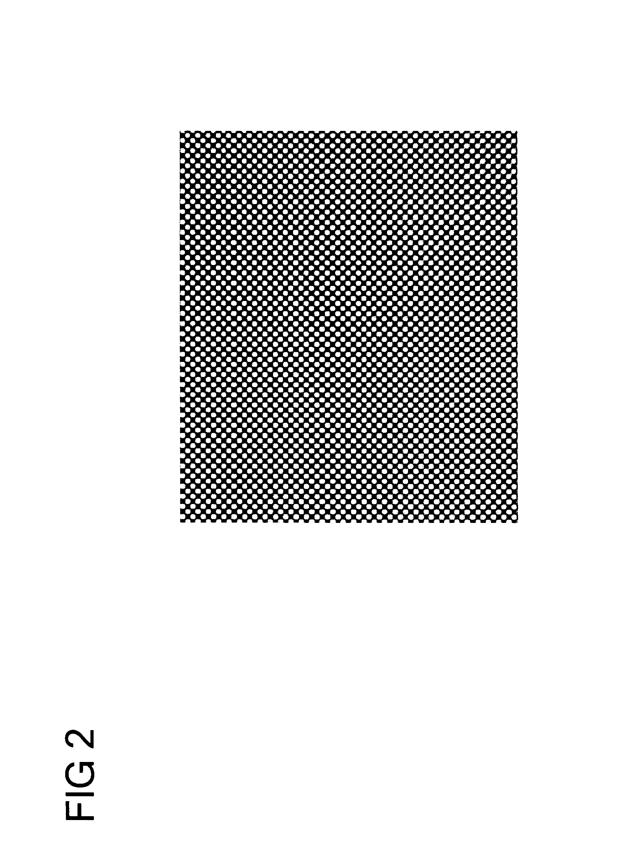

For the primary modulation a 0.210 mm thick copper modulator with a checkerboard pattern has been used. The pattern size of the modulator corresponds to about 11 detector pixels. A photography and a projection image of the modulator are shown in Figure 2.

During data acquisition it has been observed, that the system's focal spot was not perfectly stable. Furthermore, its position was not exactly reproducible. The side effect of the tiny focal spot motion is a small shift of the modulator image $M(\alpha, u + \Delta u, v + \Delta v)$ with $\Delta u$ and $\Delta v$ being unknown and not reproducible. To compensate for that shift and to determine the shift parameters on a view-by-view basis a shift detection has been implemented. This shift detection is now explained in more detail:

The CT scanner used to evaluate ECCP and its combination with PMSE comprises a rotation stage that holds the object, and a stationary x-ray source and x-ray detector. Even though there is no mechanical motion in the x-ray source the focal spot exhibits a temporal instability. Although this focal spot motion is small enough not to introduce blurring in the reconstructed CT images it is large enough to introduce a non-negligible shift of the modulator image M ($\alpha$,u,v). This shift is large enough to be observed due to the magnification effect of the modulator, which is mounted very close to the focal spot. In order to validate ECCP and the combination PMSE+ECCP it is possible according to an embodiment of the invention to correct for the focal spot wobble in advance. Since this wobble is not reproducible this correction must be carried out on a projection by projection basis, i.e. separately for each projection. For this purpose, a compensation of the modulator motion during the scan is carried out by numerically minimizing the following L1 norm with respect to the shift parameters $\Delta$u, and $\Delta$v for each projection $\alpha$:

$$\begin{pmatrix} \Delta u(\alpha) \\ \Delta v(\alpha) \end{pmatrix} = \operatorname*{argmax}_{\Delta u, \Delta v} \left\| \begin{pmatrix} \partial_u \\ \partial_v \end{pmatrix} \frac{e^{-q(\alpha,u,v)} \times e^{-M(\alpha,u,v)}}{e^{-M(\alpha,u+\Delta u,v+\Delta v)}} \right\|_1$$

Once the shift parameters have been determined for a given projection, the shifted modulator image is used as input to the ECCP. Determining of the shift parameters is not limited to the use of the above given formula. Other solutions known from the prior art may be used instead.

To calibrate the scanner a cylindrical water phantom of 153 mm diameter was scanned. Measurements of a Catphan phantom with about 200 mm diameter and of an anthropomorphic thorax phantom were performed to validate ECCP. The validation results will be discussed below. Furthermore, it is demonstrated that ECCP can be combined with the primary modulator scatter estimation (PMSE) as described in US 2007/0268997 A1. All reconstructions are based on a standard Feldkamp algorithm.

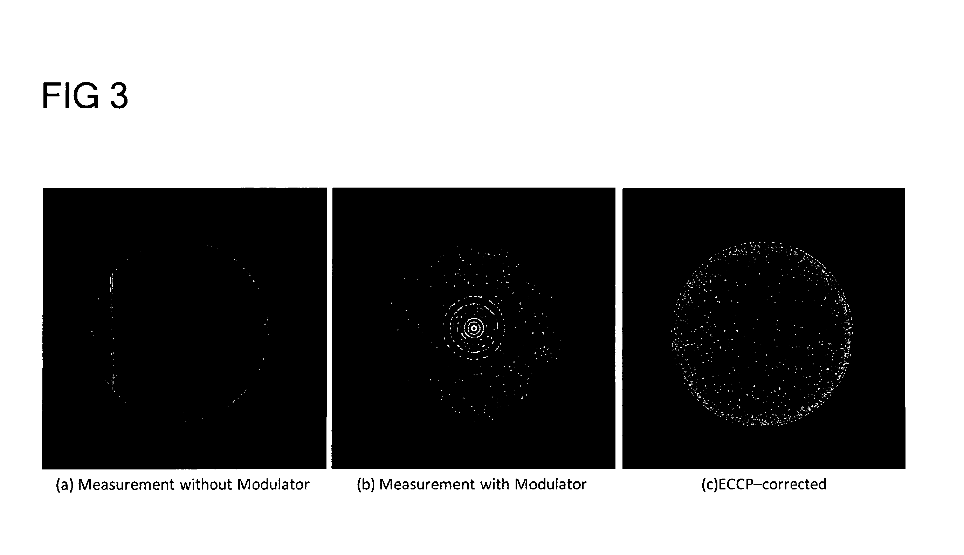

For a first experiment a cylindrical water phantom has been employed which has also been used as calibration phantom. Three reconstructions were carried out and are presented in Figure 3. Figure 3a illustrates a reconstruction from a conventional measurement without the primary modulator being installed. Figure 3b illustrates a reconstruction from data acquired with the primary modulator in place. Figure 3c illustrates a reconstruction from the same measurement with modulator in place, but reconstructed with ECCP (self-calibrated) with C = 0 HU, W = 500 HU.

As it can be seen from the measurement without the modulator (Figure 3a) cupping artifacts remain. These are due to beam hardening and due to scatter. The standard reconstruction of the measurement with modulator (Figure 3b) shows severe ring artifacts in addition to the cupping artifacts. These ring artifacts can be completely removed when applying ECCP to these data (Figure 3c). Furthermore even the subtle ring artifacts present in the measurement without modulator are no longer visible in the ECCP-corrected measurement with modulator.

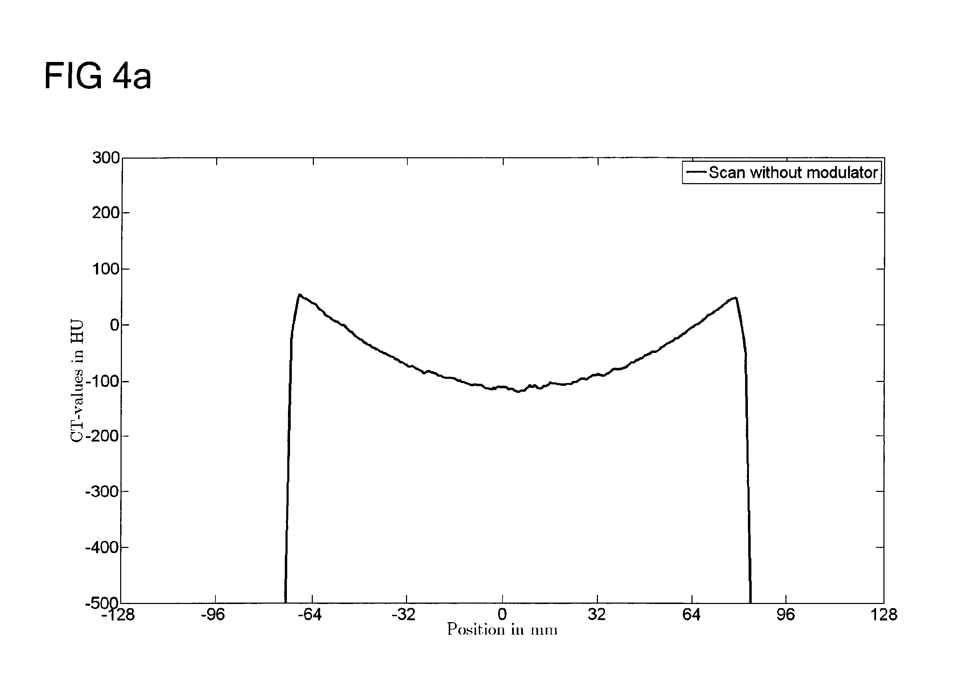

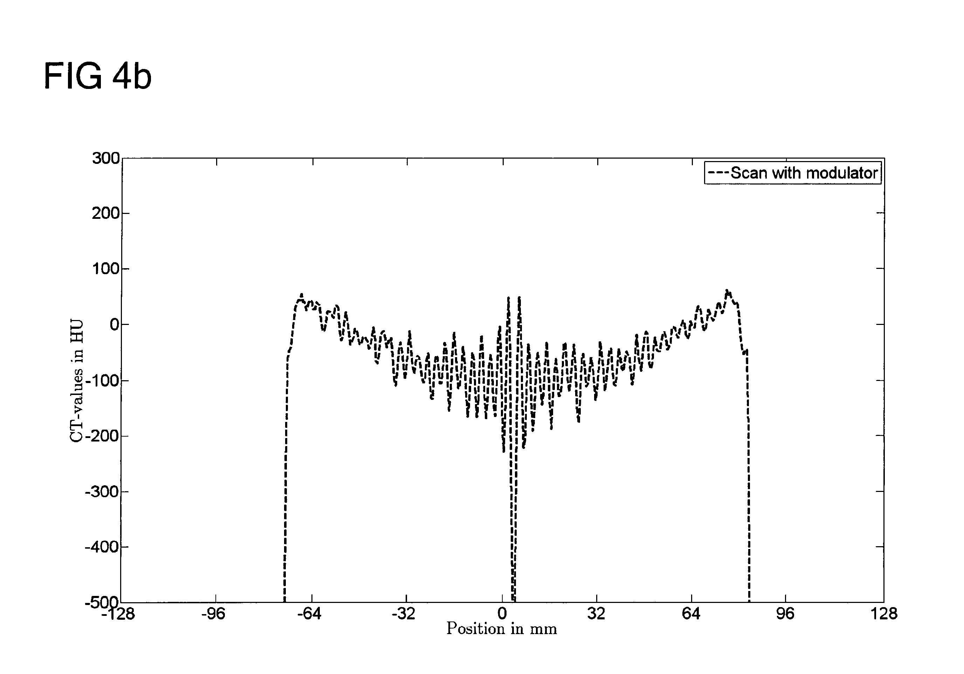

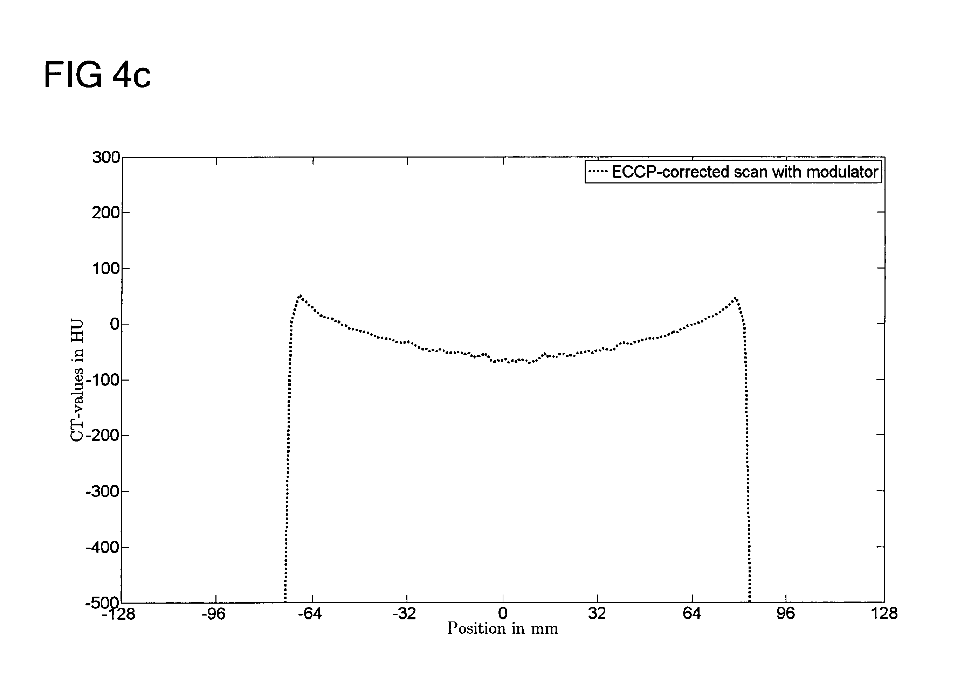

For a more quantitative evaluation profiles through the center of the water phantom are given in Figures 4. Figure 4a illustrates a scan without modulator, Figure 4b illustrates a scan with modulator, and Figure 4c illustrates an ECCP-corrected scan with modulator. As it can be seen clearly, the strong variation of the modulator scan is eliminated by ECCP. It should be noted that some cupping remains also in the ECCP-corrected image. This is due to the fact that ECCP's series expansion does not include terms of order three or higher. If higher terms would have included in ECCP, which in other embodiments of the invention could be the case, there would be no residual cupping left. Similarly, if ECC or ECCP would have been applied to the modulator-free measurement, these images would be free of cupping, too. Figures 4 demonstrate that ECCP is able to compensate for the spectral influence of the modulator, i.e. that it removes the strong ring artifacts. As it will be discussed in more detail below, the combination of the primary modulator scatter estimation (PMSE) with ECCP using the ECCP coefficients derived from PMSE-precorrected rawdata shows that terms up to quadratic order are sufficient for the here demonstrated example.

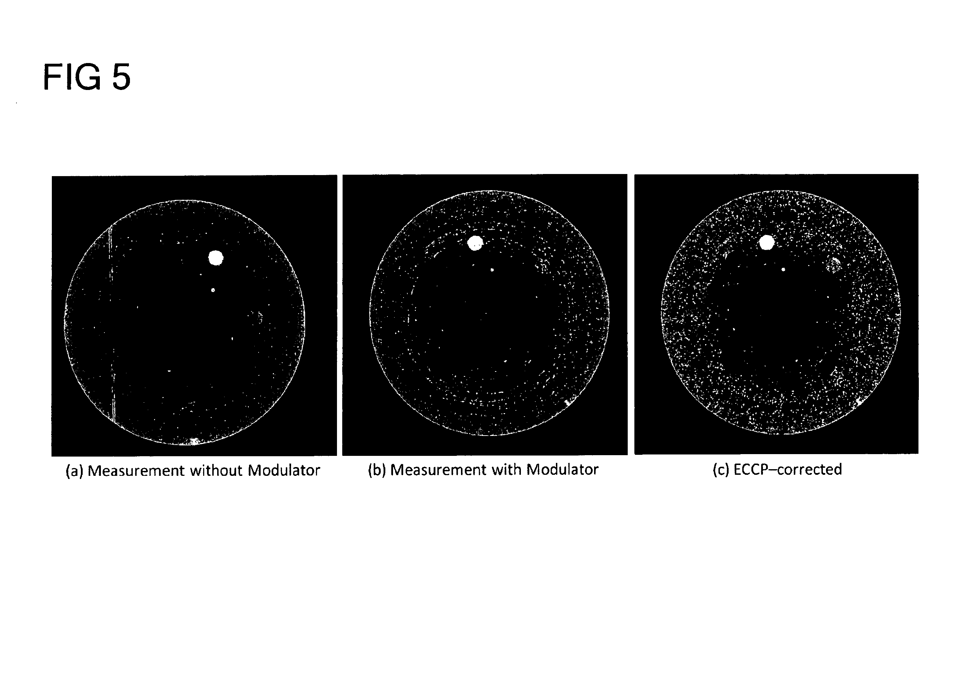

As a second test the ECCP coefficients determined from the water phantom data are applied to the Catphan phantom scan. Figure 5a shows a reconstruction from a conventional measurement without modulator. Figure 5b show a reconstruction from a primary modulator measurement, reconstructed without ECCP. Figure 5c show a ECCP-corrected version of a reconstruction from a primary modulator measurement. The ECCP coefficients were calibrated using the water phantom measurement of Figure 3 (C = 0 HU, W = 500 HU). As it can be seen from the Figures, ECCP is able to completely remove the ring artifacts induced by the primary modulator's beam hardening. It should be noted that the image noise in the measurements with the modulator being installed is higher than the image noise of the modulator-free measurement. This is simply due to the fact that both scans use the same tube current and the same integration times and that the additional attenuation induced by the modulator yields a lower primary intensity, and therefore leads to increased image noise. However, it should be noted that this also leads to reduced patient dose.

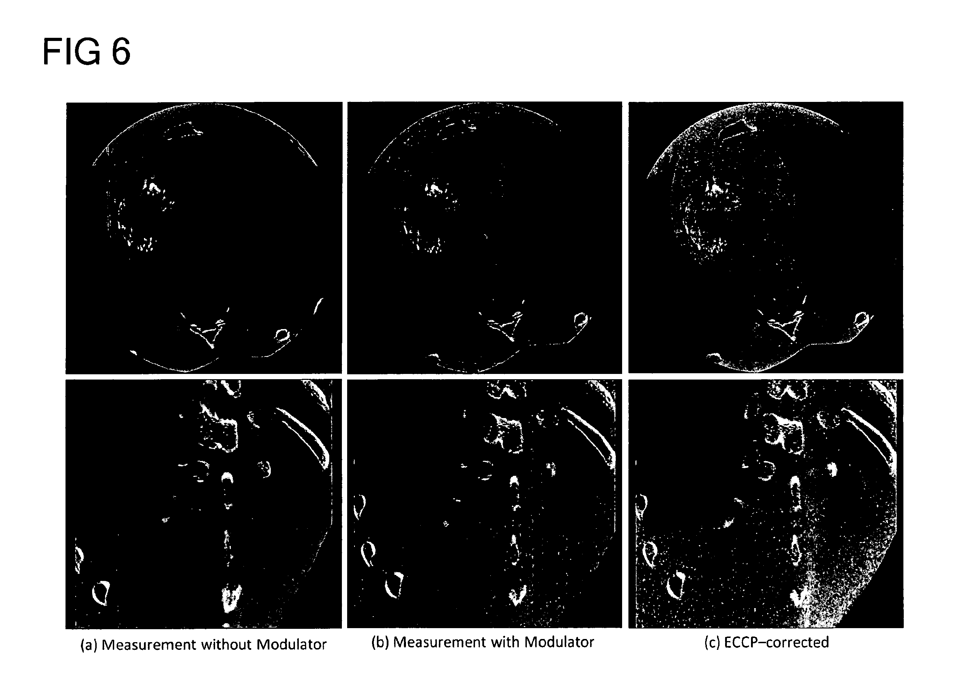

A third test applies the ECCP to an anthropomorphic thorax phantom. Since this phantom is large compared to the size of the flat detector nearly all projections are fully truncated. To avoid truncation artifacts the data were detruncated by simple extrapolation prior to entering the image reconstruction. To correct the data for the effects of the primary modulation the ECCP coefficients determined from the water phantom measurements were used. Figure 6 shows that the artifacts introduced by the modulator were almost completely removed by ECCP. Transaxial slices as well as coronal reformations are shown for three cases. Figure 6a illustrates a measurement without modulator, Figure 6b illustrates a measurement with modulator without ECCP and Figure 6c illustrates a measurement with modulator and with ECCP correction (C = 0 HU, W = 1000 HU).

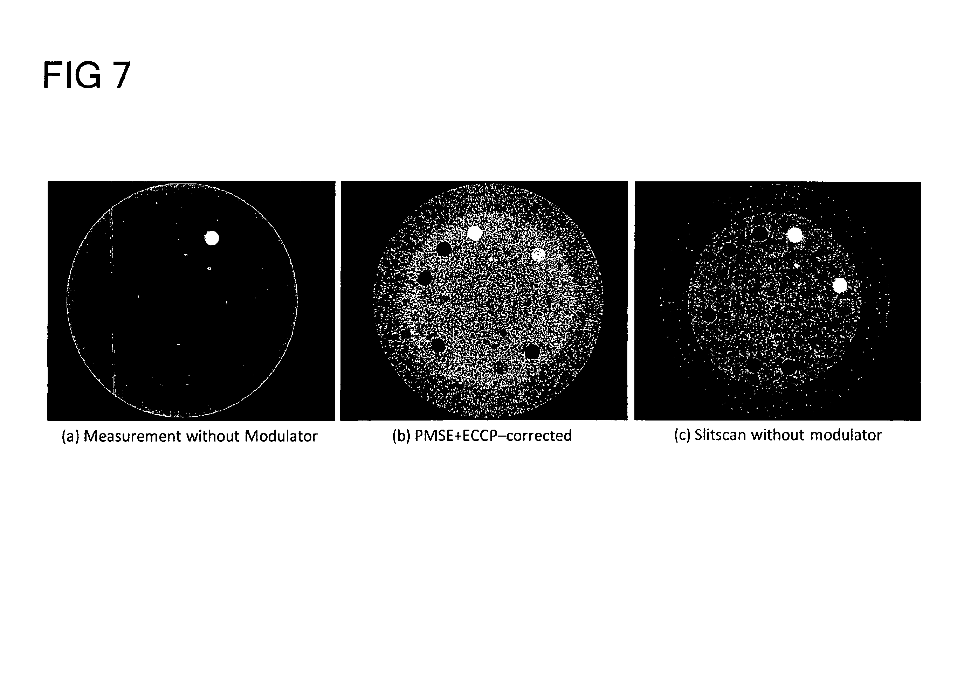

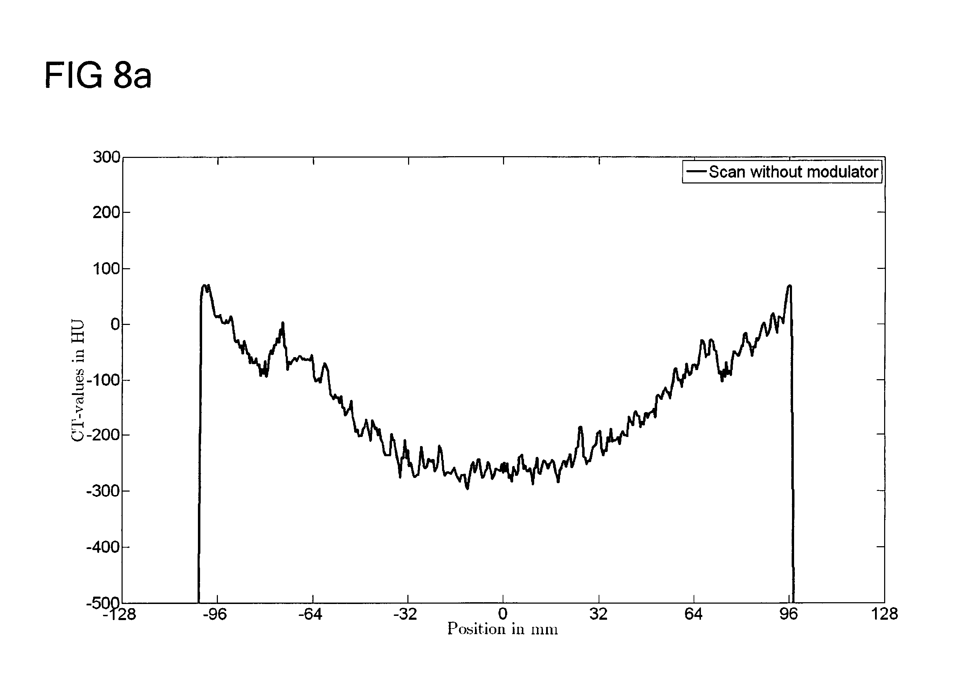

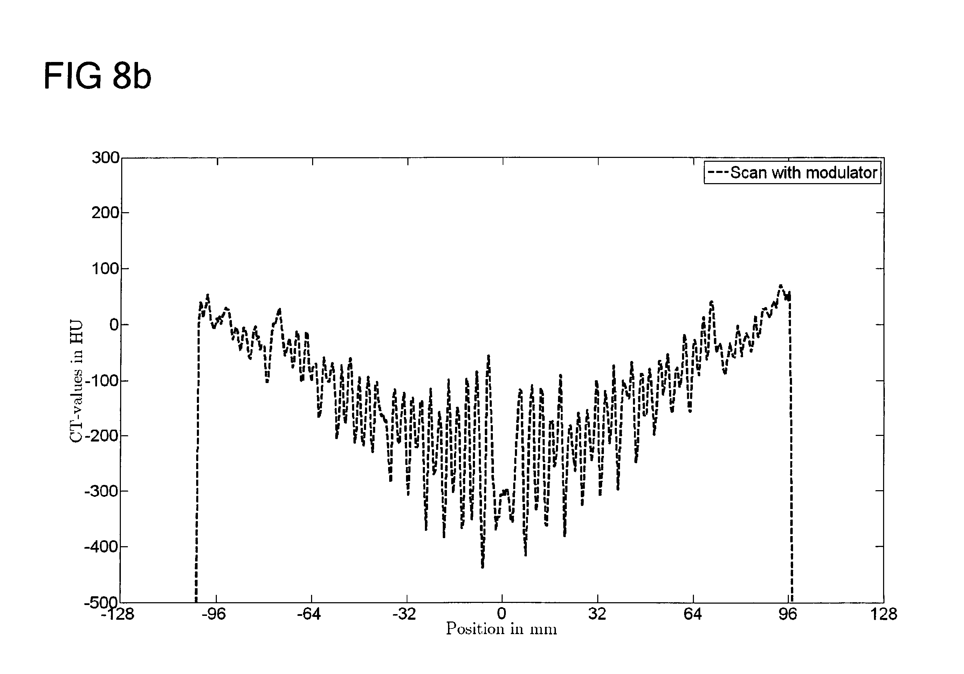

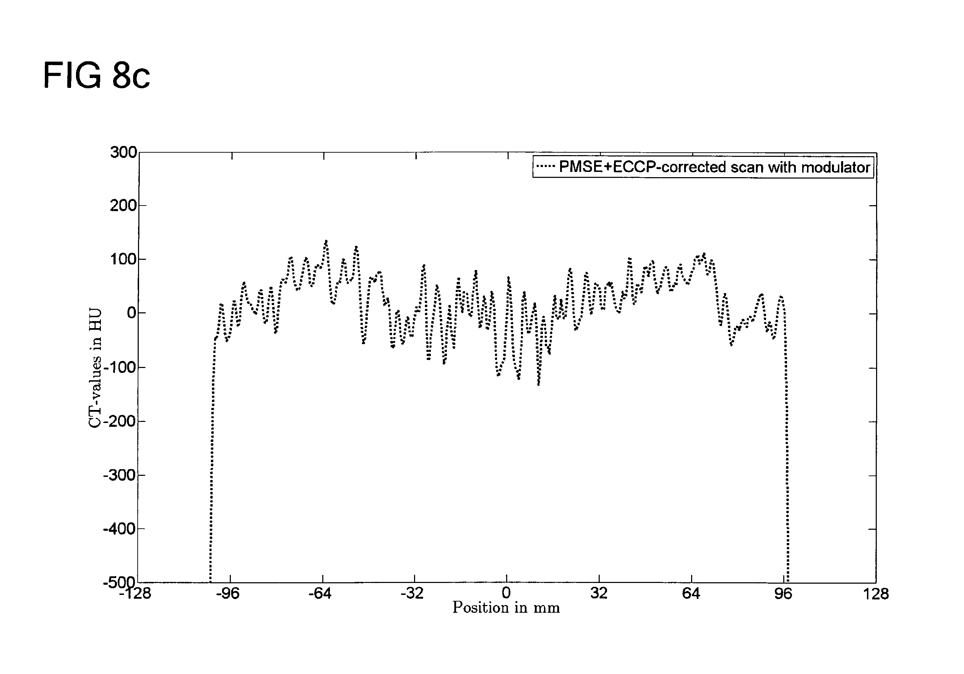

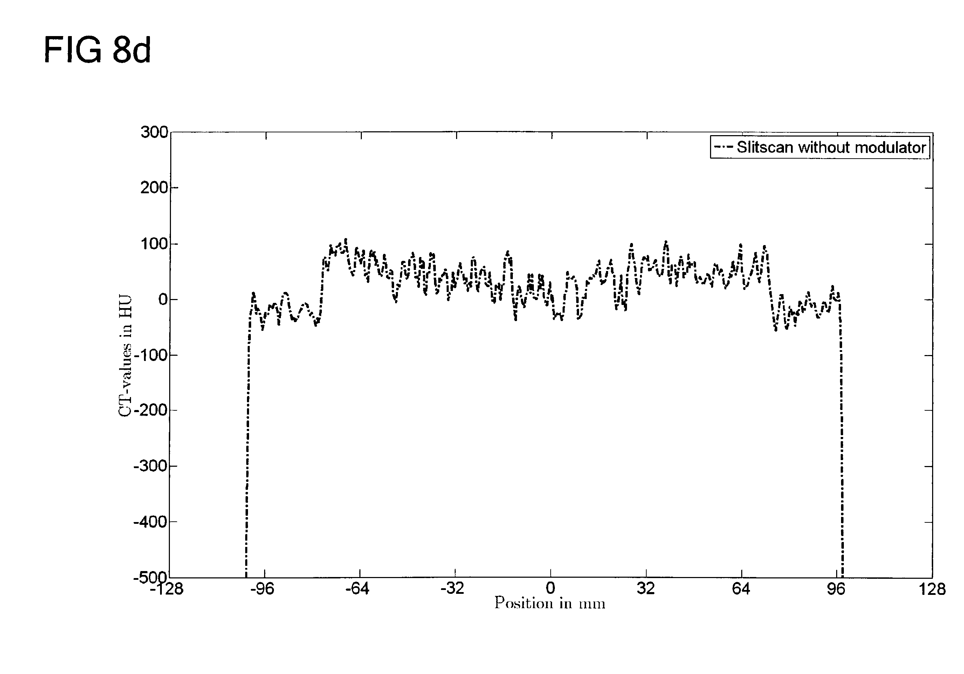

As a fourth experiment the primary modulator scatter estimation (PMSE) has been combined with ECCP. To do so, new ECCP correction coefficients were determined from the water phantom measurement. In contrast to the previous tests PMSE has been applied to the water phantom rawdata prior to running the ECCP calibration. These new ECCP coefficients were then used to correct the PMSE-corrected projection data of the Catphan phantom. In addition, a slitscan of the Catphan phantom was acquired to obtain rawdata that are nearly free of scatter. Figures 7 show the corresponding reconstructions. Thereby, Figure 7a illustrates a standard measurement, Figure 7b illustrates a PMSE and ECCP-corrected measurement with modulator, and Figure 7c illustrates a slitscan (C = 0 HU, W = 500 HU). As it can be seen from the Figures, PMSE and ECCP work together quite well. Ring artifacts, beam hardening artifacts and cupping due to scatter are nearly completely removed. Comparison with the slitscan image reveals that some real slight scatter artifacts remain. These findings are confirmed by the profile plots through the Catphan phantom shown in Figures 8. Figure 8a illustrates a scan without modulator, Figure 8b illustrates a scan with modulator, Figure 8c illustrates a PMSE+ECCP-corrected scan with modulator, and Figure 8d illustrates a slitscan without modulator.

In this particular embodiment, in which the ECCP is used in combination with another pre-processing method (in this case PMSE), the ECCP was used after the PMSE had been applied. This chronology has been chosen in this particular embodiment because the PMSE calculates the scatter signal in an object independent way and the intention of this particular embodiment is to make use of this advantage before applying the ECCP. However the usage of the ECCP is neither in this particular embodiment nor in any other embodiment, in which ECCP may be combined with another pre-processing method, limited to an explicit chronology.

In a further embodiment of the invention, the ECCP calibration technique is combined with a method called empirical cupping correction for scanners with tube voltage modulation (ECCU), as described in L. Ritschl, F. Bergner, C. Fleischmann, and M. Kachelrieß, "Water calibration for CT scanners with tube voltage modulation" Phys. Med. Biol., vol. 55, pp. 4107 - 4117, 2010. The ECCU method suggests to intentional change the tube voltage U in order to create a change in the resulting spectrum. The tube voltage typically is a function of the projection angle only (U($\alpha$)). A combination with the ECCP method is made e.g. by using the ansatz

$$p = \sum_{hij} c_{hij} U^h M^i q^j$$

In other words, a second error function is introduced into the precorrection-function. The second error function $U^h$ represents a variation of the X-ray source. This embodiment may be of interest for CT systems that modulate the tube voltage, such as C-arm CT systems, for example. In principle, the precorrection-function may include one, two or even more error functions, said functions representing effects, said effects being caused by any structural and/or functional part of the image acquisition apparatus and said effects influencing the measured spectrum. The method according to the present invention generalizes to solving problems where an acquisition and/or an somehow measured error variation and/or on any way known error variation can be used as error function, i.e. where information about the change and/or variation and/or distribution of the error are obtained.

It has to be noted, that the method of the invention can be used not only for cupping correction, but also for capping correction. In other words, the term cupping as used in the present specification, includes cupping or capping effects.

It will be evident to those skilled in the art that the invention is not limited to the details of the foregoing illustrative embodiments, and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. It will furthermore be evident that the word "comprising" does not exclude other elements or steps, that the words "a" or "an" does not exclude a plurality, and that a single element, such as a computer system or another unit may fulfil the functions of several means recited in the claims.

**EP 2 584 532 A1**

**Claims**

1. A method for artifact correction in image acquisition, e.g. in CT imaging or in another imaging modality, said image acquisition using an image acquisition apparatus,
said method using a precorrection-function, the parameters of which being determined using a combination of reconstructed images,
**characterized in that** said precorrection-function is parameterized by one or more error variation functions M that can be spatially and/or temporally dependent.

2. The method as claimed in claim 1, **characterized in that** the precorrection-function is a polynomial function, defined as

$$p = \sum_{ij} c_{ij} M^i q^j$$

with p being the precorrected data, and q being the measured data, and $c_{ij}$ being a set of correction coefficients, and M being the error variation function.

3. The method as claimed in claim 2, **characterized in that** the correction coefficients $c_{ij}$ are determined using a linear combination of reconstructed images.

4. The method as claimed in one of the preceding claims, **characterized in that** said error variation function M is a spectrum change function representing effects influencing the measured spectrum.

5. The method as claimed in claim 4, **characterized in that** said error variation function M is a spatially dependent spectrum change function.

6. The method as claimed in one of the preceding claims, **characterized in that** said error variation function is obtained by means of image acquisition and representing effects influencing the measured acquisition, said effects being caused by said image acquisition apparatus.

7. An image acquisition apparatus, **characterized in that** said apparatus comprises means adapted for carrying out the method as claimed in one of claims 1 to 6.

8. A computer program comprising computer instructions adapted to perform the method as claimed in one of claims 1 to 6 when the computer program is executed in a computer.

FIG 1a

$q^0$ $\qquad\qquad$ $q^1$ $\qquad\qquad$ $q^2$

$M^0$

FIG 1b

$q^0$  $q^1$  $q^2$

$M^1$

EP 2 584 532 A1

FIG 1c

$q^0$         $q^1$         $q^2$

$M^2$

FIG 2

# FIG 3

(a) Measurement without Modulator  (b) Measurement with Modulator  (c)ECCP–corrected

# FIG 4a

FIG 4b

EP 2 584 532 A1

# FIG 4c

EP 2 584 532 A1

FIG 5

(a) Measurement without Modulator

(b) Measurement with Modulator

(c) ECCP-corrected

FIG 6

(a) Measurement without Modulator    (b) Measurement with Modulator    (c) ECCP-corrected

FIG 7

(a) Measurement without Modulator  (b) PMSE+ECCP—corrected  (c) Slitscan without modulator

# FIG 8a

EP 2 584 532 A1

FIG 8b

# FIG 8c

EP 2 584 532 A1

# FIG 8d

EP 2 584 532 A1

Europäisches
Patentamt

European
Patent Office

Office européen
des brevets

# EUROPEAN SEARCH REPORT

**Application Number**

EP 11 00 8461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KACHELRIESS MARC ET AL: "Empirical cupping correction: A first-order raw data precorrection for cone-beam computed tomography", MEDICAL PHYSICS, AIP, MELVILLE, NY, US, vol. 33, no. 5, 19 April 2006 (2006-04-19), pages 1269-1274, XP012092094, ISSN: 0094-2405, DOI: 10.1118/1.2188076 * abstract * * Section II * | 1-8 | INV. G06T11/00 |
| X | LUDWIG RITSCHL ET AL: "Empirical cupping correction for CT scanners with tube voltage modulation (ECCU)", 2009 IEEE NUCLEAR SCIENCE SYMPOSIUM AND MEDICAL IMAGING CONFERENCE (NSS/MIC 2009), ORLANDO, FL, USA, IEEE, PISCATAWAY, NJ, USA, 24 October 2009 (2009-10-24), pages 3950-9394, XP031621334, ISBN: 978-1-4244-3961-4 * abstract * * Section II * * Section III * | 1-8 | |
| Y | WO 2008/012710 A1 (KONINKL PHILIPS ELECTRONICS NV [NL]; TIMMER JAN [NL]; VAN DE HAAR PETE) 31 January 2008 (2008-01-31) * the whole document * | 1-8 | **TECHNICAL FIELDS SEARCHED (IPC)**<br><br>G06T |
| Y | US 2011/103542 A1 (ALLMENDINGER THOMAS [DE] ET AL) 5 May 2011 (2011-05-05) * the whole document * | 1-8 | |

The present search report has been drawn up for all claims

| Place of search | Date of completion of the search | Examiner |
|---|---|---|
| Munich | 13 March 2012 | Leclercq, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 00 8461

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2012

| Patent document cited in search report | | Publication date | Patent family member(s) | | Publication date |
|---|---|---|---|---|---|
| WO 2008012710 | A1 | 31-01-2008 | CN | 101489486 A | 22-07-2009 |
| | | | EP | 2046203 A1 | 15-04-2009 |
| | | | JP | 2009544349 A | 17-12-2009 |
| | | | US | 2009310754 A1 | 17-12-2009 |
| | | | WO | 2008012710 A1 | 31-01-2008 |
| US 2011103542 | A1 | 05-05-2011 | CN | 102048552 A | 11-05-2011 |
| | | | DE | 102009051384 A1 | 12-05-2011 |
| | | | US | 2011103542 A1 | 05-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005018660 B4

- US 20070268997 A1

**Non-patent literature cited in the description**

- **L. RITSCHL ; F. BERGNER ; C. FLEISCHMANN ; M. KACHELRIEß.** Water calibration for CT scanners with tube voltage modulation. *Phys. Med. Biol.,* 2010, vol. 55, 4107-4117